# EUROPEAN PATENT SPECIFICATION

(11) **EP 4 387 926 B1**
(45) Date of publication and mention of the grant of the patent: **23.04.2025**
(21) Application number: 22764732.8
(22) Date of filing: 11.08.2022
(51) Int. Cl.: C01B 7/07, B01D 53/14, C25B 1/02, C25B 1/26

(54) **STORAGE MEDIUM FOR STORING HYDROGEN CHLORIDE AND METHOD FOR SEPARATING AND STORING HYDROGEN CHLORIDE HCL FROM HCL CONTAINING GAS**
SPEICHERMEDIUM ZUR SPEICHERUNG VON CHLORWASSERSTOFF UND VERFAHREN ZUR TRENNUNG UND SPEICHERUNG VON CHLORWASSERSTOFF (HCL) AUS HCL-HALTIGEM GAS
SUPPORT DE STOCKAGE POUR STOCKER UN CHLORURE D'HYDROGÈNE ET PROCÉDÉ DE SÉPARATION ET DE STOCKAGE DE CHLORURE D'HYDROGÈNE HCL À PARTIR DE GAZ CONTENANT DU HCL

(30) Priority: 19.08.2021 EP 21192129
(43) Date of publication of application: 26.06.2024
(73) Proprietor: Freie Universität Berlin, 14195 Berlin (DE)
(72) Inventor: HASENSTAB-RIEDEL, Sebastian, 14532 Kleinmachnow (DE); VOSSNACKER, Patrick, 14165 Berlin (DE)
(74) Representative: Maikowski & Ninnemann Patentanwälte Partnerschaft mbB
(86) International application number: PCT/EP2022/072594
(87) International publication number: WO 2023/020942

(56) References cited:
- EP-A1- 3 488 914
- EP-A1- 3 670 445
- WO-A1-2006/029788
- US-A1- 2018 223 204

## Description

The invention relates Storage medium for storing hydrogen chloride, the use of such a storage medium for separating of HCl from process gas and/or for reversible absorption and storage of HCl from process gas; a method for separating and storing hydrogen chloride HCl from HCl containing gas, and a method for releasing hydrogen and chlorine from the storage medium.

### Description

Hydrogen chloride is used in the production of chlorides, fertilizers, and dyes, in electroplating, and in the photographic, textile, and rubber industries. Hydrogen chloride is typically produced by combining chlorine and hydrogen. The industrial production of hydrogen chloride is often integrated with the formation of chlorinated and fluorinated organic compounds, e.g., Teflon, Freon, and other CFCs, as well as chloroacetic acid and PVC.

Hydrogen chloride is also produced in large quantities in industry as a by-product of organic chlorination reactions.

Some of the hydrogen chloride obtained as by-product is decomposed back into chlorine and hydrogen by gas phase oxidation or electrochemical processes such as hydrochloric acid diaphragm electrolysis. These processes are all very energy intensive, use precious metal catalysts and require diaphragms or membranes during electrolysis.

Thus, it would be of an advantage to provide a method for separating HCl from industrial process gases that allows an easy and cost efficient separation of HCl.

It is in generally known that chlorides form with hydrogen chloride (HCl) poly(hydrogen chloride)chlorates(-I) of the type [Cat][Cl(HCl)n]. Examples are the symmetrical ammonium salts NR₄ (R = Me, Et, Pr, Bu, Pen). The symmetrical tetrapentylammonium bichloride is the first to be described as a liquid. In addition, the [NMe₃(C₁₆H₃₃)] and a few imidazolium-based bichlorides are known. However, the efficiency of these known compounds for absorbing HCl is not satisfying. Note, that a long alkyl chain can undergo chlorination reactions which might lead into decomposition of the material or modifies the properties of the compound, as shown for corresponding polychloride systems.

The amount of HCl absorbed by said compounds depends on different factors, such as temperature and corresponding partial pressure of the hydrogen chloride, as well as physical properties of the ionic compound. For example, the properties of the ionic compounds such as viscosities, conductivities, molar mass, etc. can be influenced by the choice and substitution of the cation, as shown for polychlorides, see WO 2019/215037 A1 and EP 3 670 445 A1.

It was therefore an object of the present invention to provide a compound that shows an improved storage capability for HCl.

This object is solved by providing a storage medium for storing hydrogen chloride with the features of claim 1 and a method for separating and storing hydrogen chloride with the features of claim 9.

Accordingly, a storage medium for storing hydrogen chloride (HCl) comprising at least one ionic compound of the general formulae (I)

[NR¹ₐR²_{b}R³_{c}][Cl(HCl)ₙ] (I)

is provided,
Wherein R¹, R², R³ being independent from each other an alkyl moiety selected from the group of methyl, ethyl, n-propyl, iso-propyl, n-butyl, iso-butyl and sec-butyl-, preferably methyl, ethyl, n-propyl, n-butyl;
Wherein at least one of the moieties R¹, R², R³ differs from each of the others moieties R¹, R², R³;
Wherein a, b, c are independently from each other 0, 1, 2 or 3, wherein the sum of a+b+c always has to be 4;
Wherein n >= 1, preferably n = 1-6, more preferably n = 1, 2, 3, 4, and
with a viscosity in a range between 5 and 50 mPas, preferably between 10 and 20 mPas (25°C, 1000 hPa).

Viscosity was measured using a Ubbelohde viscosimeter for determination of the kinematic viscosity according DIN 51 562-2. The dynamic viscosity was calculated from the kinematic viscosity after determination of the density.

The ionic liquid compound of formulae (I) allows for a reversible absorption and storage of HCl from process gas. Another advantage is that hydrogen H₂ can be released from compound (I) by electrolysis in an electrochemical process. Further storage of chlorine Cl₂ in the ionic liquid is possible that can be used as Cl₂ source for further synthetic applications, such as synthesis of phosgen (VoBnacker et al., Novel Synthetic Pathway for the Production of Phosgene, Science Advances 2021,7, eabj5186).

The storage medium for HCl according to the invention comprises an ionic compound, in particular an ionic liquid, made of an asymmetrically substituted ammonium cation and poly(HCl)chloride anion. The cation is an ammonium cation that has at least two different alkyl moieties. The ammonium cation may have two, three or four different alkyl moieties, in particular lower alkyl moieties.

The ionic liquid according to the invention has a low viscosity, high electrical conductivity, low decomposition voltage, low molar mass. Furthermore, these compounds are easy to synthesize and can be produced in large quantities from very cheap chemicals.

Moreover, the ionic liquid can be decomposed into hydrogen and chlorine by electrolysis at a low cell voltage. Thus, the ionic liquid can be used as an anhydrous system to produce chlorine and hydrogen.

The ionic liquid of the storage system according to the invention has several advantages: the IL shows low corrosion; efficient storage of HCl with simultaneous purification of other impurities, since they are not absorbed by the ionic liquid; electrolysis shows significant gas evolution only at one electrode, thus easier separation of the resulting products is available; possible simpler cell design of the electrolysis; potential avoidance of diaphragms or membranes in the cell; carbon electrodes may be used instead of expensive precious metals as electrode material.

In an embodiment of the present storage medium a, b = 1, 2 or 3, and c = 0, 1 in the ionic compound of general formula (I).

In a further embodiment of the present storage medium the ionic compound of general formula (I) is selected from [NEt₃Me][Cl(HCl)ₙ], [NEt₂Me₂][Cl(HCl)ₙ], [NEtMe₃][Cl(HCl)ₙ], [NBuEt₂Me][Cl(HCl)ₙ], [NPr₃Me][Cl(HCl)ₙ], [NBu₂Me₂][Cl(HCl)ₙ], [NBu₃Me][Cl(HCl)ₙ, with n being 1-6, preferably 1-4. It is to be understood that n can be any possible number between 1 and 6, preferably between 1 and 4. There is an equilibrium between different [Cl(HCl)*ₙ*]⁻ (*n* = 1-4) species in the liquid.

In a preferred embodiment of the present storage medium the ionic compound of general formula (I) is selected from [NEt₃Me][Cl(HCl)ₙ], [NEt₂Me₂][Cl(HCl)ₙ], [NEtMe₃][Cl(HCl)ₙ], with n being 1-6, preferably 1-4.

In still a further embodiment of the present storage medium the ionic compound of general formula (I) contains (in the loaded state) at least 0.3 g HCl / g ionic compound, preferably at least 0.4 g HCl / g ionic compound, more preferably at least 0.5 g HCl / g ionic compound. Thus, the storage capacity by mass may be between 0.3 and 1 g HCl/g ionic compound, preferably between 0.4 and 0.8 g HCl/g ionic compound, more preferably between 0.5 and 0.7 g HCl/g ionic compound. The storage capacity was determined as follows: A defined amount of chloride salt was loaded into a Schlenk flask. The chloride salt was loaded with HCl as described in the Example 1 and 2. The amount of HCl stored on the chloride salt was determined by weighing.

The storage capacity by amount of substance may be at least 1.5 mol/mol ionic compound, preferably at least 2.0 mol / mol ionic compound, more preferably at least 2.5 mol/mol ionic compound. The range of storage capacity by amount of substance may be between 1.5 and 3 mol/mol ionic compound, preferably between 2.0 and 2.8 mol/mol ionic compound, more preferably between 2.2 and 2.6 mol/mol ionic compound.

Furthermore, the present storage medium has a conductivity of at least 20 mS/cm (20°C), preferably at least 30 mS/cm, more preferably at least 40 mS/cm, even more preferably at least 50 mS/cm. The conductivity was determined using a SevenCompact S230 Conductivity meter from Mettler Toledo.

The density of the present storage medium may be in a range between 0.5 and 1.5 kg/L, preferably between 0.8 and 1.2 kg/L, more preferably between 0.9 and 1.1 kg/L. Densities are determined by using a Schlenk tube with a volume scale in which a defined volume of the substance is weighted.

In an embodiment of the present storage medium a hydrogen H₂ development is detectable at at least 1 V, preferably at least 0.8 V, more preferably at least 0,5 V, such as in the range of 1-1.5 V, preferably in the range of 1-1.2 V.

As mentioned, the storage medium according to the invention may be used for separating of HCl from process gas and/or for reversible absorption and storage of HCl from process gas.

This is done in a method for separating and storing hydrogen chloride HCl from HCl containing gas, in particular HCl containing process gas,
wherein the HCl containing gas is contacted with at least one ionic compound of general formulae (II)

   [NR¹ₐR²_{b}R³_{c}] [CI] (II)
Wherein R¹, R², R³ being independent from each other an alkyl moiety selected from the group of methyl, ethyl, n-propyl, iso-propyl, n-butyl, iso-butyl and sec-butyl, preferably methyl, ethyl, n-propyl;
Wherein at least one of the moieties R¹, R², R³ differs from each of the others moieties R¹, R², R³;
Wherein a, b, c are independently from each other 0, 1, 2 or 3, wherein the sum of a+b+c always has to be 4;
Wherein the hydrogen chloride HCl from the HCl containing gas is bound by the at least one ionic compound of general formulae (II) thereby providing the ionic compound of general formulae (I)

   [NR¹ₐR²_{b}R³_{c}][Cl(HCl)ₙ] (I)
Wherein R¹, R², R³ being independent from each other an alkyl moiety selected from the group of methyl, ethyl, n-propyl, iso-propyl, n-butyl, iso-butyl and sec-butyl, preferably methyl, ethyl, n-propyl;
Wherein at least one of the moieties R¹, R², R³ differs from each of the others moieties R¹, R², R³;
Wherein a, b, c are independently from each other 0, 1, 2 or 3, wherein the sum of a+b+c always has to be 4;
Wherein n >= 1, preferably n = 1-6, more preferably n = 1, 2, 3, 4.

In an embodiment of the present method the ionic compound of general formula (II) is selected from [NEt₃Me][Cl], [NEt₂Me₂][Cl], [NEtMe₃][Cl], [NBuEt₂Me][Cl], [NPr₃Me][Cl], [NBu₂Me₂][Cl], preferably from [NEt₃Me][Cl], [NEt₂Me₂][Cl], [NEtMe₃][Cl].

As mentioned previously, the hydrogen chloride stored in the ionic compound of general formulae (I) of the storage medium may be released form said compound if needed.

In an embodiment the hydrogen chloride HCl stored in the ionic compound of general formulae (I) is split into hydrogen H₂ and chlorine Cl₂ by electrolysis, specifically by applying a cell voltage of at least 1 V, preferably at least 0.8 V, more preferably at least 0,5 V, such as in the range of 1-1.5 V, preferably in the range of 1-1.2 V.

Simultaneously to the release of hydrogen and chlorine the compound of general formulae (II) is obtained. Compound of formulae (II) may be recycled for reuse as HCl storage medium.

In a further embodiment the chlorine Cl₂ released and obtained during electrolysis is (immediately) stored, in particular in the ionic compound of general formulae (II), providing an ionic compound of general formulae (III)

[NR¹ₐR²_{b}R³_{c}][Clₙ] (III)

Wherein R¹, R², R³ being independent from each other an alkyl moiety selected from the group of methyl, ethyl, n-propyl, iso-propyl, n-butyl, iso-butyl and sec-butyl, preferably methyl, ethyl, n-propyl;
Wherein at least one of the moieties R¹, R², R³ differs from each of the others moieties R¹, R², R³;
Wherein a, b, c are independently from each other 0, 1, 2 or 3, wherein the sum of a+b+c always has to be 4;
Wherein n >= 1, preferably n = 1-7, more preferably n = 3, 5, 7.

The storage of chlorine from chlorine containing gases is described for example in WO 2019/215037 A1.

The invention is now explained in more detail by means of examples with reference to the figures. It shows:
- Figure 1: a scheme of using a compound of the storage medium according to the invention for bonding and storing HCl and conversion of HCl to chlorine and hydrogen;
- Figure 2: a scheme of using a compound of the storage medium according to the invention for bonding and storing HCl, conversion of HCl to chlorine and hydrogen, subsequent storage of chlorine and its conversion to chemical products such as phosgene;
- Figure 3: Molecular structure in the solid state of [NEt₃Me][ClHCl];
- Figure 4: a current over voltage diagram of [NEt₃Me][ClHCl];
- Figure 5: a current over time diagram of [NEt₃Me][ClHCl];
- Figure 6: a UV/Vis spectrum of the gas phase after electrolysis of [NEt₃Me][ClHCl]; and
- Figure 7: a NMR spectrum of [NEt₃Me][ClHCl] after electrolysis.

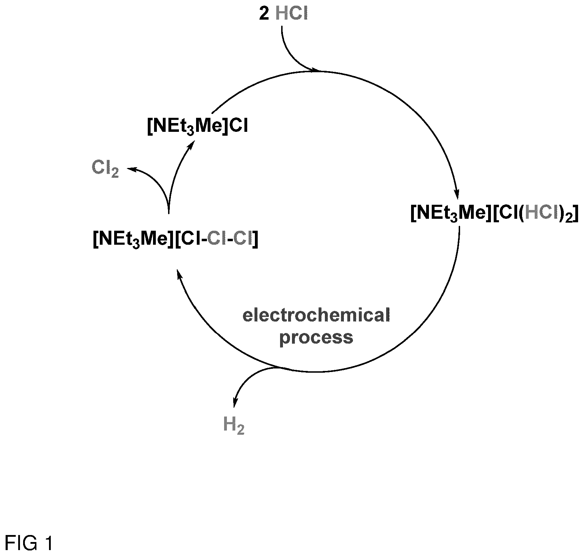

Figure 1 illustrates a cycle for storage of HCl using an ionic compound of formulae (II) under formation of an ionic compound of formulae (I) and subsequent release of hydrogen and chlorine under electrolytic conditions.

Accordingly, 2 molecules HCl are absorbed by [NEt₃Me]Cl providing [NEt₃Me][Cl(HCl)₂]. When applying a voltage of about 1-1.2 V to [NEt₃Me][Cl(HCl)₂] the hydrogen chloride HCl stored in the ionic compound is split into hydrogen H₂ and chlorine Cl₂.

The chlorine Cl₂ released and obtained during electrolysis is (immediately) stored as [NEt₃Me][Cl-Cl-Cl] and subsequently released.

Simultaneously to the release of hydrogen and chlorine [NEt₃Me]Cl is obtained that is recycled for reuse as HCl storage medium.

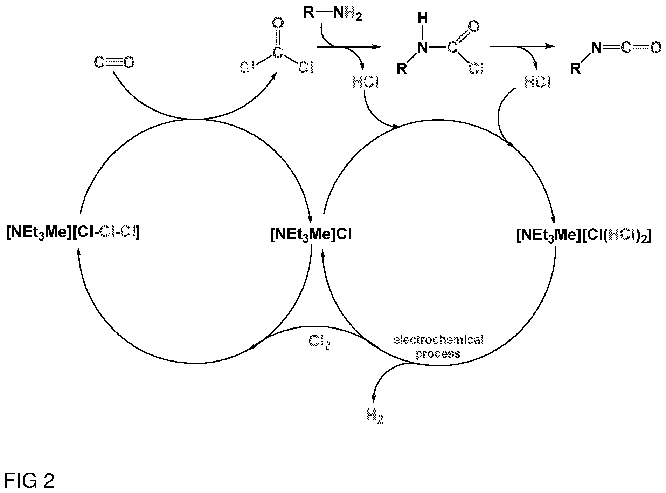

In the larger context of Fig. 2, a cycling process for chlorine can thus be established, as the ionic liquid formed [NEt₃Me][Cl₃] is reacted again with CO to form phosgene, which is further reacted with amines to form isocyanates and HCl.

### Example 1

[NEt₃Me]Cl (36.2 g, 239 mmol) were dried at 150 °C for 1 hour to remove residual moisture. The dry salt was placed in a flask which was evacuated. Hydrogen chloride gas was introduced into the flask (18.5 g, 507 mmol, 2.12 equiv.) until the system retains a constant pressure of 950 mbar. A low viscous, colorless liquid, which stores 0.51 g HCl per g storage medium, is obtained.

The obtained compound can be described as [NEt₃Me][Cl(HCl)_{2.16}] which means there are 2.16 equivalents of HCl per Chloride. There is an equilibrium between different [Cl(HCl)*ₙ*]⁻ (*n =* 1-4) species in the liquid. This was demonstrated for comparable [F(HF)*ₙ*]⁻ systems using NMR spectroscopy. The most stable [Cl(HCl)*ₙ*] species is the [ClHCl]⁻ anion of which also a molecular structure in the solid state was obtained.

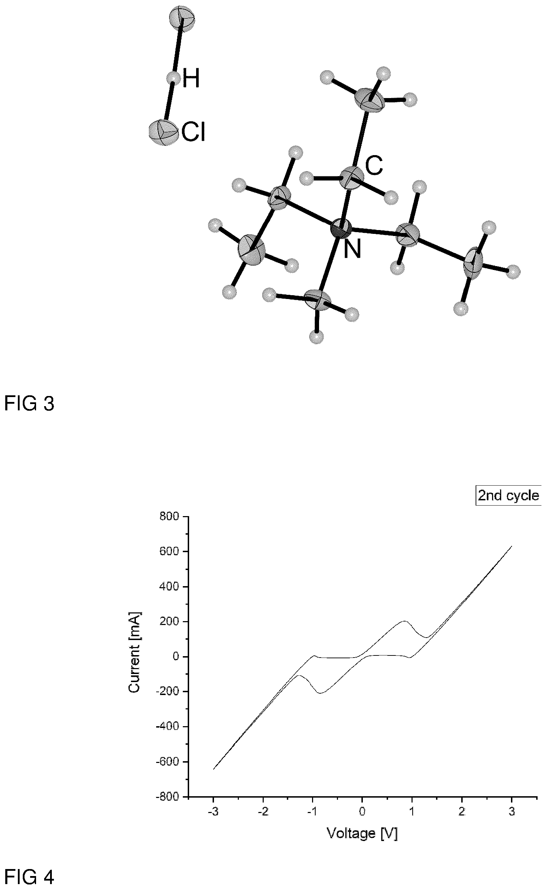

Figure 3 shows the molecular structure of [NEt₃Me][ClHCl] in the solid state.

Properties of [NEt₃Me][Cl(HCl)_{2.16}] were determined: Conductivity: 62.6 mS/cm at 25 °C; Viscostiy: 12 mPa s, Density: 1.03 g/mL.

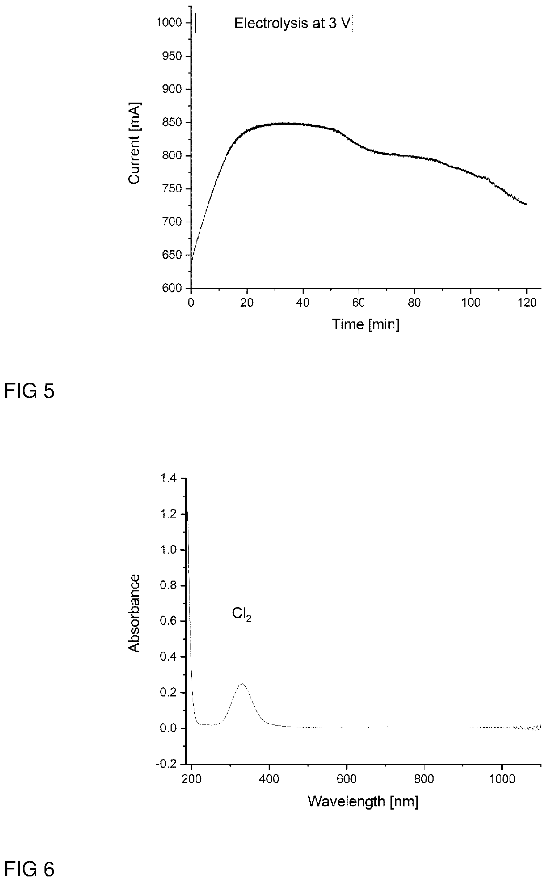

[NEt₃Me][Cl(HCl)_{2.16}] was characterized by current-voltage (CV) experiments (see Diagram of Figure 4) and current-time experiments (see Diagram of Figure 5). A gas evolution at the cathode was observed and a change of color to yellow was observed. Electrolysis at 3 V for 2 h intensify the yellow color.

Characterization of the gas phase via UV/Vis showed the formation of chlorine (see diagram of Figure 6).

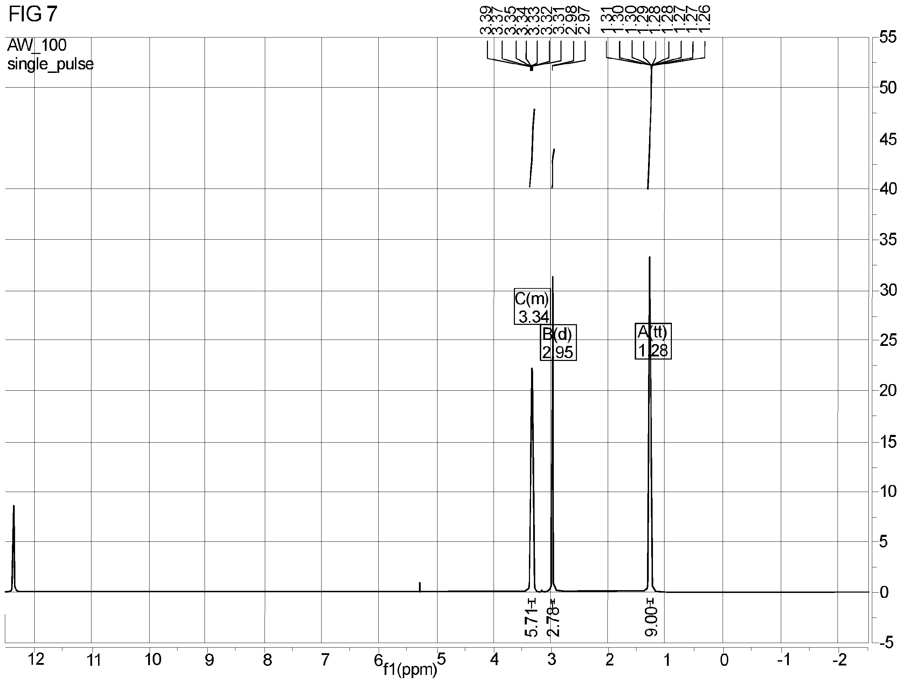

1H NMR spectra of the remaining IL showed the signals for the cation and ClHCl (see diagram of Figure 7).

### Example 2

[NMePr₃]Cl (1.52 g, 7.72 mmol) were dried at 150 °C for 1 hour to remove residual moisture. Hydrogen chloride was added to the system (0.757 g, 20.8 mmol, 2.69 equiv.). A low viscous, colorless liquid, which stores 0.50 g HCl per g storage medium, is obtained.

Further studies on [NR₃Me][Cl(HCl)*ₙ*] systems were performed and the following storage capacities, densities, dynamic viscosities and conductivities were determined. The samples of the loaded system were prepared as described above for [NEt₃Me]Cl.

**Table 1. Storage capacities of [NR₃Me]Cl and physical properties of [NR₃Me][Cl(HCl)ₙ]**

| **Substrate** | **Density [kg L⁻¹]** | **Dynamic viscosity [mPa s]** | **Conductivity at 25°C [mS cm⁻¹]** | **Storage capacity by amount of substance [mol mol⁻¹]^{[a]}** | **Storage capacity by mass [kg kg⁻¹]^{[b]}** |
|---|---|---|---|---|---|
| **[NEt₃Me]Cl** | 1.03 | 12 | 62.6 | 2.16 | 0.51 |
| **[NEt₂Me₂]Cl** | 0.98 | 7 | 70.1 | 2.07 | 0.55 |
| **[NPr₃Me]Cl** | 0.93 | 14 | 24.0 | 2.69 | 0.50 |
| **[NBu₃Me]Cl** | 0.94 | 26 | 9.8 | 2.57 | 0.40 |

| | | | | | |
|---|---|---|---|---|---|
| [a] Storage capacity by amount of substance is equal to the amount of substance of HCl which can be stored on 1 mol of the chloride salt. [b] Storage capacity by mass is equal to the mass of HCl which can be stored on 1 kg of the chloride salt. | | | | | |

## Claims

1. Storage medium for storing hydrogen chloride (HCl) comprising at least one ionic compound of the general formulae (I)
[NR¹ₐR²_{b}R³_{c}][Cl(HCl)ₙ] (I)
Wherein R¹, R², R³ being independent from each other an alkyl moiety selected from the group of methyl, ethyl, n-propyl, iso-propyl, n-butyl, iso-butyl and sec-butyl, preferably methyl, ethyl, n-propyl, n-butyl;
Wherein at least one of the moieties R¹, R², R³ differs from each of the others moieties R¹, R², R³;
Wherein a, b, c are independently from each other 0, 1, 2 or 3, wherein the sum of a+b+c always has to be 4;
Wherein n >= 1, preferably n = 1-6, more preferably n = 1, 2, 3, 4, and
With a viscosity in a range between 5 and 50 mPas, preferably between 10 and 20 mPas (25°C, 1000 hPa).

2. Storage medium according to claim 1, **characterized in that** in the ionic compound of general formula (I) a, b = 1, 2 or 3, and c = 0, 1.

3. Storage medium according to one of the preceding claims, **characterized in that** the ionic compound of general formula (I) is selected from [NEt₃Me][Cl(HCl)ₙ], [NEt₂Me₂][Cl(HCl)ₙ], [NEtMe₃][Cl(HCl)ₙ], [NBuEt₂Me][Cl(HCl)ₙ], [NPr₃Me][Cl(HCl)ₙ], [NBu₂Me₂][Cl(HCl)ₙ], with n being 1-6, preferably 1-4.

4. Storage medium according to one of the preceding claims, **characterized in that** the ionic compound of general formula (I) is selected from [NEt₃Me][Cl(HCl)ₙ], [NEt₂Me₂][Cl(HCl)ₙ], [NEtMe₃][Cl(HCl)ₙ], with n being 1-6, preferably 1-4.

5. Storage medium according to one of the preceding claims, **characterized in that** the ionic compound of general formula (I) contains (in the loaded state) at least 0.3 g HCl / g ionic compound, preferably at least 0.4 g HCl / g ionic compound, more preferably at least 0.5 g HCl / g ionic compound.

6. Storage medium according to one of the preceding claims, **characterized by** a conductivity of at least 20 mS/cm (20°C), preferably at least 30 mS/cm, more preferably at least 40 mS/cm, even more preferably at least 50 mS /cm.

7. Storage medium according to one of the preceding claims, **characterized by** a hydrogen H₂ development at at least 1 V, preferably at least 0.8 V, more preferably at least 0,5 V, such as in the range of 1-1.5 V, preferably in the range of 1-1.2 V.

8. Use of a storage medium according to one of the preceding claims for separating of HCl from process gas and/or for reversible absorption and storage of HCl from process gas.

9. Method for separating and storing hydrogen chloride HCl from HCl containing gas, in particular HCl containing process gas, by contacting the HCl containing gas with at least one ionic compound of general formulae (II)
[NR¹ₐR²_{b}R³_{c}] [CI] (II)
Wherein R¹, R², R³ being independent from each other an alkyl moiety selected from the group of methyl, ethyl, n-propyl, iso-propyl, n-butyl, iso-butyl and sec-butyl, preferably methyl, ethyl, n-propyl,
Wherein at least one of the moieties R¹, R², R³ differs from each of the others moieties R¹, R², R³,
Wherein a, b, c are independently from each other 0, 1, 2 or 3, wherein the sum of a+b+c always has to be 4;
Wherein the hydrogen chloride HCl from the HCl containing gas is bound by the at least one ionic compound of general formulae (II) thereby providing the ionic compound of general formulae (I)
[NR¹ₐR²_{b}R³_{c}][Cl(HCl)ₙ] (I)
Wherein R¹, R², R³ being independent from each other an alkyl moiety selected from the group of methyl, ethyl, n-propyl, iso-propyl, n-butyl, iso-butyl and sec-butyl, preferably methyl, ethyl, n-propyl;
Wherein at least one of the moieties R¹, R², R³ differs from each of the others moieties R¹, R², R³;
Wherein a, b, c are independently from each other 0, 1, 2 or 3, wherein the sum of a+b+c always has to be 4;
Wherein n >= 1, preferably n = 1-6, more preferably n = 1, 2, 3, 4.

10. Method according to claim 9, **characterized in that** the ionic compound of general formula (II) is selected from [NEt₃Me][Cl], [NEt₂Me₂][Cl], [NEtMe₃][Cl], [NBuEt₂Me][Cl], [NPr₃Me][Cl], [NBu₂Me₂][Cl], preferably from [NEt₃Me][Cl], [NEt₂Me₂][Cl], [NEtMe₃][Cl].

11. Method for releasing hydrogen and chlorine from an ionic compound of general formulae (I) according to one of the claims 1-7, **characterized in that** the hydrogen chloride HCl stored in the ionic compound of general formulae (I) is split into hydrogen H₂ and intermediate chlorine Cl₂ by electrolysis and the compound of general formulae (II) is obtained.

12. Method according to claim 11, **characterized in that** the intermediate chlorine Cl₂ obtained during electrolysis is stored in the ionic compound of general formulae (II) providing an ionic compound of general formulae (III)
[NR¹ₐR²_{b}R³_{c}][Clₙ] (III)
Wherein R¹, R², R³ being independent from each other an alkyl moiety selected from the group of methyl, ethyl, n-propyl, iso-propyl, n-butyl, iso-butyl and sec-butyl, preferably methyl, ethyl, n-propyl;
Wherein at least one of the moieties R¹, R², R³ differs from each of the others moieties R¹, R², R³,
Wherein a, b, c are independently from each other 0, 1, 2 or 3, wherein the sum of a+b+c always has to be 4;
Wherein n >= 1, preferably n = 1-7, more preferably n = 3, 5, 7.

## Patentansprüche

1. Speichermedium zur Speicherung von Chlorwasserstoff (HCl) mit mindestens einer ionischen Verbindung der allgemeinen Formel (I)
[NR¹ₐR²_{b}R³_{c}][Cl(HCl)ₙ] (I)
wobei R¹, R², R³ unabhängig voneinander ein Alklyrest sind, der ausgewählt ist aus der Gruppe von Methyl, Ethyl, n-Propyl, iso-Propyl, n-Butyl, iso-Butyl und sec-Butyl, vorzugsweise Methyl, Ethyl, n-Propyl, n-Butyl;
wobei mindestens einer der Reste R¹, R², R³ von jedem der anderen Reste R¹, R², R³ verschieden ist;
wobei a, b, c unabhängig voneinander 0, 1, 2 oder 3 sind, wobei die Summe von a+b+c immer 4 sein muss;
wobei n ≥ 1, vorzugsweise n = 1-6, mehr bevorzugt n = 1, 2, 3, 4, und
mit einer Viskosität in einem Bereich zwischen 5 und 50 mPas, vorzugsweise zwischen 10 und 20 mPas (25°C, 1000 hPa).

2. Speichermedium nach Anspruch 1, **dadurch gekennzeichnet, dass** in der ionischen Verbindung der allgemeinen Formel (I) a, b = 1, 2 oder 3 und c = 0, 1.

3. Speichermedium nach einem der vorhergehenden Ansprüche, **dadurch gekennzeichnet, dass** die ionische Verbindung der allgemeinen Formel (I) ausgewählt ist aus [NEt₃Me][Cl(HCl)ₙ], [NEt₂Me₂][Cl(HCl)ₙ], [NEₜMe₃][Cl(NCl)ₙ], [NBuEt₂Me][Cl(HCl)ₙ], [NPr₃Me][Cl(HCl)ₙ], [NBu₂Me₂][Cl(HCl)ₙ], wobei n 1-6 ist, vorzugsweise 1-4.

4. Speichermedium nach einem der vorhergehenden Ansprüche, **dadurch gekennzeichnet, dass** die ionische Verbindung der allgemeinen Formel (I) ausgewählt ist aus [Net₃Me][Cl(HCl)ₙ], [NEt₂Me₂][Cl(HCl)ₙ], [NEtMe₃][Cl(HCl)ₙ], wobei n 1-6 ist, vorzugsweise 1-4.

5. Speichermedium nach einem der vorhergehenden Ansprüche, **dadurch gekennzeichnet, dass** die ionische Verbindung der allgemeinen Formel (I) (im beladenen Zustand) mindestens 0,3 g HCl / g ionische Verbindung enthält, vorzugsweise mindestens 0,4 g HCl / g ionische Verbindung, mehr bevorzugt mindestens 0,5 g HCl / g ionische Verbindung.

6. Speichermedium nach einem der vorhergehenden Ansprüche, **gekennzeichnet durch** eine Leitfähigkeit von mindestens 20 mS/cm (20°C), vorzugsweise mindestens 30 mS/cm, mehr bevorzugt mindestens 40 mS/cm, noch mehr bevorzugt mindestens 50 mS/cm.

7. Speichermedium nach einem der vorhergehenden Ansprüche, **gekennzeichnet durch** eine Wasserstoff(H₂)-Entwicklung bei mindestens 1 V, vorzugsweise mindestens 0,8 V, mehr bevorzugt mindestens 0,5 V, wie zum Beispiel im Bereich von 1-1,5 V, vorzugsweise im Bereich von 1-1,2 V.

8. Verwendung eines Speichermediums nach einem der vorhergehenden Ansprüche zum Trennen von HCl von Prozessgas und/oder zur reversiblen Absorption und Speicherung von HCl aus Prozessgas.

9. Verfahren zum Trennen und Speichern von Chlorwasserstoff HCl aus HCl-haltigem Gas, insbesondere HCl-haltigem Prozessgas, indem das HCl-haltige Gas mit mindestens einer ionischen Verbindung der allgemeinen Formel (II) in Kontakt gebracht wird
[NR¹ₐR²_{b}R³_{c}][Cl] (II)
wobei R¹, R², R³ unabhängig voneinander ein Alklyrest sind, der ausgewählt ist aus der Gruppe von Methyl, Ethyl, n-Propyl, iso-Propyl, n-Butyl, iso-Butyl und sec-Butyl, vorzugsweise Methyl, Ethyl, n-Propyl,
wobei mindestens einer der Reste R¹, R², R³ von jedem der anderen Reste R¹, R², R³ verschieden ist;
wobei a, b, c unabhängig voneinander 0, 1, 2, oder 3 sind, wobei die Summe von a+b+c immer 4 sein muss;
wobei der Chlorwasserstoff HCl aus dem HCl-haltigen Gas durch die mindestens eine ionische Verbindung der allgemeinen Formel (II) gebunden ist, wodurch die ionische Verbindung der allgemeinen Formel (I) bereitgestellt wird
[NR¹ₐR²_{b}R³_{c}][Cl(HCl)ₙ] (I)
wobei R¹, R², R³ unabhängig voneinander ein Alklyrest sind, der ausgewählt ist aus der Gruppe von Methyl, Ethyl, n-Propyl, iso-Propyl, n-Butyl, iso-Butyl und sec-Butyl, vorzugsweise Methyl, Ethyl, n-Propyl;
wobei mindestens einer der Reste R¹, R², R³ von jedem der anderen Reste R¹, R², R³ verschieden ist;
wobei a, b, c unabhängig voneinander 0, 1, 2 oder 3 sind, wobei die Summe von a+b+c immer 4 sein muss;
wobei n ≥ 1, vorzugsweise n = 1-6, mehr bevorzugt n = 1, 2, 3, 4.

10. Verfahren nach Anspruch 9, **dadurch gekennzeichnet, dass** die ionische Verbindung der allgemeinen Formel (II) ausgewählt ist aus [NEt₃Me][Cl], [NEt₂Me₂][Cl], [NEtMe₃][Cl], [NBuEt₂Me][Cl], [NPr₃Me][Cl], [NBu₂Me₂][Cl], vorzugsweise aus [NEt₃Me][Cl], [NEt₂Me₂][Cl], [NEtMe₃][Cl].

11. Verfahren zum Freisetzen von Wasserstoff und Chlor aus einer ionischen Verbindung der allgemeinen Formel (I) nach einem der Ansprüche 1-7, **dadurch gekennzeichnet, dass** der in der ionischen Verbindung der allgemeinen Formel (I) gespeicherte Chlorwasserstoff HCl durch Elektrolyse in Wasserstoff H₂ und Chlor Cl₂ als Zwischenprodukt gespalten wird und man die Verbindung der allgemeinen Formel (II) erhält.

12. Verfahren nach Anspruch 11, **dadurch gekennzeichnet, dass** das während der Elektrolyse als Zwischenprodukt erhaltene Chlor Cl₂ in der ionischen Verbindung der allgemeinen Formel (II) gespeichert wird, sodass man eine ionische Verbindung der allgemeinen Formel (III) erhält
[NR¹ₐR²_{b}R³_{c}][Clₙ] (III)
wobei R¹, R², R³ unabhängig voneinander ein Alklyrest sind, der ausgewählt ist aus der Gruppe von Methyl, Ethyl, n-Propyl, iso-Propyl, n-Butyl, iso-Butyl und sec-Butyl, vorzugsweise Methyl, Ethyl, n-Propyl;
wobei mindestens einer der Reste R¹, R², R³ von jedem der anderen Reste R¹, R², R³ verschieden ist;
wobei a, b, c unabhängig voneinander 0, 1, 2 oder 3 sind, wobei die Summe von a+b+c immer 4 sein muss;
wobei n ≥ 1, vorzugsweise n = 1-7, mehr bevorzugt n = 3, 5, 7.

## Revendications

1. Support de stockage pour stocker un chlorure d'hydrogène (HCl) comprenant au moins un composé ionique de la formule générale (I)
[NR¹ₐR²_{b}R³_{c}][Cl(HCl)ₙ] (I)
R¹, R², R³ étant indépendamment les uns des autres une fraction alkyle choisie dans le groupe de méthyle, éthyle, n-propyle, iso-propyle, n-butyle, iso-butyle et sec-butyle, de préférence méthyle, éthyle, n-propyle, n-butyle ;
dans lequel au moins une des fractions R¹, R², R³ diffère de chacune des autres fractions R¹, R², R³ ;
dans lequel a, b, c sont indépendamment l'un de l'autre 0, 1, 2 ou 3, la somme de a+b+c devant toujours être égale à 4 ;
dans lequel n ≥ 1, de préférence n = 1-6, plus préférentiellement n = 1, 2, 3, 4, et
d'une viscosité comprise dans une plage entre 5 et 50 mPas, de préférence entre 10 et 20 mPas (25°C, 1000 hPa).

2. Support de stockage selon la revendication 1, **caractérisé en ce que** dans le composé ionique de la formule générale (I) a, b = 1, 2 ou 3, et c = 0, 1.

3. Support de stockage selon l'une quelconque des revendications précédentes, **caractérisé en ce que** le composé ionique de la formule générale (I) est choisi parmi [NEt₃Me][Cl(HCl)ₙ], [NEt₂Me₂][Cl(HCl)ₙ], [NEₜMe₃][Cl(NCl)ₙ], [NBuEt₂Me][Cl(HCl)ₙ], [NPr₃Me][Cl(HCl)ₙ], [NBu₂Me₂][Cl(HCl)ₙ], n étant compris entre 1 et 6, de préférence entre 1 et 4.

4. Support de stockage selon l'une quelconque des revendications précédentes, **caractérisé en ce que** le composé ionique de la formule générale (I) est choisi parmi [Net₃Me][Cl(HCl)ₙ], [NEt₂Me₂][Cl(HCl)ₙ], [NEtMe₃][Cl(HCl)ₙ], n étant compris entre 1 et 6, de préférence entre 1 et 4.

5. Support de stockage selon l'une quelconque des revendications précédentes, **caractérisé en ce que** le composé ionique de la formule générale (I) contient (à l'état chargé) au moins 0,3 g HCl / g de composé ionique, de préférence au moins 0,4 g HCl / g de composé ionique, plus préférentiellement au moins 0,5 g HCl / g de composé ionique.

6. Support de stockage selon l'une quelconque des revendications précédentes, **caractérisé par** une conductivité d'au moins 20 mS/cm (20°C), de préférence d'au moins 30 mS/cm, plus préférentiellement d'au moins 40 mS/cm, encore plus préférentiellement d'au moins 50 mS/cm.

7. Support de stockage selon l'une quelconque des revendications précédentes, **caractérisé par** un développement de l'hydrogène H₂ à au moins 1 V, de préférence à au moins 0,8 V, plus préférentiellement à au moins 0,5 V, tel que dans la plage de 1-1,5 V, de préférence dans la plage de 1-1,2 V.

8. Utilisation d'un support de stockage selon l'une quelconque des revendications précédentes pour séparer le HCl du gaz de traitement et/ou pour absorber et stocker de manière réversible le HCl du gaz de traitement.

9. Procédé de séparation et de stockage du chlorure d'hydrogène HCl à partir d'un gaz contenant du HCl, en particulier un gaz de traitement contenant du HCl, par mise en contact du gaz contenant du HCl avec au moins un composé ionique de la formule générale (II)
[NR¹ₐR²_{b}R³_{c}] [Cl] (II)
R¹, R², R³ étant indépendamment les uns des autres une fraction alkyle choisie dans le groupe de méthyle, éthyle, n-propyle, iso-propyle, n-butyle, iso-butyle et sec-butyle, de préférence méthyle, éthyle, n-propyle,
dans lequel au moins une des fractions R¹, R², R³ diffère de chacune des autres fractions R¹, R², R³,
dans lequel a, b, c sont indépendamment l'un de l'autre 0, 1, 2 ou 3, la somme de a+b+c devant toujours être égale à 4 ;
dans lequel le chlorure d'hydrogène HCl provenant du gaz contenant le HCl est lié à au moins un composé ionique de la formule générale (II), ce qui permet d'obtenir le composé ionique de la formule générale (I)
[NR¹ₐR²_{b}R³_{c}][Cl(HCl)ₙ] (I)
R¹, R², R³ étant indépendamment les uns des autres une fraction alkyle choisie dans le groupe de méthyle, éthyle, n-propyle, iso-propyle, n-butyle, iso-butyle et sec-butyle, de préférence méthyle, éthyle, n-propyle ;
dans lequel au moins une des fractions R¹, R², R³ diffère de chacune des autres fractions R¹, R², R³ ;
dans lequel a, b, c sont indépendamment l'un de l'autre 0, 1, 2 ou 3, la somme de a+b+c devant toujours être égale à 4 ;
dans lequel n ≥ 1, de préférence n = 1-6, plus préférentiellement n = 1, 2, 3, 4.

10. Procédé selon la revendication 9, **caractérisé en ce que** le composé ionique de la formule générale (II) est choisi parmi [NEt₃Me][Cl], [NEt₂Me₂][Cl], [NEtMe₃][Cl], [NBuEt₂Me][Cl], [NPr₃Me][Cl], [NBu₂Me₂][Cl], de préférence parmi [NEt₃Me][Cl], [NEt₂Me₂][Cl], [NEtMe₃][Cl].

11. Procédé pour libérer l'hydrogène et le chlore d'un composé ionique de la formule générale (I) selon l'une quelconque des revendications 1-7, **caractérisé en ce que** le chlorure d'hydrogène HCl stocké dans le composé ionique de la formule générale (I) est divisé en hydrogène H₂ et en chlore intermédiaire Cl₂ par électrolyse et le composé de la formule générale (II) est obtenu.

12. Procédé selon la revendication 11, **caractérisé en ce que** le chlore intermédiaire Cl₂ obtenu lors de l'électrolyse est stocké dans le composé ionique de la formule générale (II), ce qui donne un composé ionique de la formule générale (III)
[NR¹ₐR²_{b}R³_{c}][Clₙ] (III)
R¹, R², R³ étant indépendamment les uns des autres une fraction alkyle choisie dans le groupe de méthyle, éthyle, n-propyle, iso-propyle, n-butyle, iso-butyle et sec-butyle, de préférence méthyle, éthyle, n-propyle ;
dans lequel au moins une des fractions R¹, R², R³ diffère de chacune des autres fractions R¹, R², R³,
dans lequel a, b, c sont indépendamment l'un de l'autre 0, 1, 2 ou 3, la somme de a+b+c devant toujours être égale à 4 ;
dans lequel n ≥ 1, de préférence n = 1-7, plus préférentiellement n = 3, 5, 7.
